# EUROPEAN PATENT APPLICATION

(11) **EP 4 491 500 A1**
(43) Date of publication of application: **15.01.2025**
(21) Application number: 24177059.3
(22) Date of filing: 21.05.2024
(51) Int. Cl.: B63B 17/02, B60J 7/12

(54) **VESSEL HAVING A FOLDABLE TOP**

(30) Priority: 13.07.2023 NL 2035361
(71) Applicant: Vlootbeek Beheer B.V., 6051 AG Maasbracht (NL)
(72) Inventor: Houben, Gerardus Jozef Eduard, Linne (NL)
(74) Representative: Veldman-Dijkers, Cornelia G. C.

(57) **Abstract**

A vessel is provided with a roof comprising a foldable top, which top is movable from a folded position to an unfolded position and vice versa. The top being provided with folding mechanisms laying on both sides of the vessel, which folding mechanisms being connected to each other by U-shaped brackets supporting a flexible cloth. Each folding mechanism being provided with a first element being pivotably with respect to a frame and being pivotably connected to an end of a first U-shaped bracket and a second element being pivotably connected to the first element and pivotably connected to an end of the second U-shaped bracket, a third element being pivotably connected with the second element and a fourth element being pivotably connected with the third element. The first and third element pivot in the opposite direction of the second and fourth element. The fourth element is hingedly connected with an end of the at least third U-shaped bracket.

## Description

### Field of the invention

The invention relates to a vessel provided with a roof comprising a foldable top, which top is movable from a folded position to an unfolded position and vice versa, the top being provided with folding mechanisms laying on both sides of the vessel, which folding mechanisms being connected to each other by U-shaped brackets supporting a flexible cloth, each folding mechanism being provided with a first element being pivotably with respect to a frame and being pivotably connected to an end of a first U-shaped bracket and a second element being pivotably connected to the first element and pivotably connected to an end of the second U-shaped bracket.

### Background of the invention

Vessels with a foldable top have the advantage that the top in bad weather conditions protects the space underneath the top in the vessel against bad weather or sun, while in good weather conditions the top can be folded, whereby the space and the people present being in the fresh air.

A vessel known from NL1006422C2 contains two pivotable elements each connected pivotable with a U-shaped bracket.

When the top is unfolded the distance between the U-shaped brackets cannot be large because otherwise the cloth being hold by the U-shaped brackets collapses, in particular in case of strong wind or when a gulf of water lands on the cloth.

### Summary of the invention

At least one purpose of the invention is to provide a vessel in which a relatively large space in the vessel can be covered with a flexible folding cloth.

This purpose is achieved in the vessel according to the invention in that each folding mechanism comprises a third element being pivotably connected with the second element and a fourth element being pivotably connected with the third element, the first and third element pivoting in the opposite direction of the second and fourth element, the fourth element being hingedly connected with an end of the at least third U-shaped bracket, whilst the third element is not provided with a U-shaped bracket.

All U-shaped brackets are in use at a top side of the elements. When folding the top the first and second element pivot to each other in such a direction that the U-shaped brackets are on sides opposite of each other of the first and the second element. If the third element also would be provided with a U-shaped bracket, by swiveling of the third element towards the second element the herewith connected U-shaped bracket would swivel towards the second U-shaped bracket and abut therewith, which is undesired.

Because the third element is not but the fourth element is provided with a U-shaped bracket and the fourth element swivels in the same direction as the second element, it is possible to prevent undesired abutment of the U-shaped brackets and it is possible for the U-shaped brackets to be positioned in the folded position almost parallel to each other.

To keep the distance between the U-shaped brackets on one side remote from the elements almost the same so that the span of the cloth is each time almost the same, the lengths of the third element and the fourth element are preferably about half of the length of the second element.

It is noted that from US2970007A a cabrio top for a vehicle is known that is provided with a first element 22 being pivotable with respect to a frame, which first element 22 being hingedly connected with an end of the first U-shaped bracket 53 and a second element 21 being hingedly connected with the first element, which second element being hingedly connected with an end of the second U-shaped bracket 52. The cabrio top as known from US2970007A further includes a third element 19 being pivotally connected with the second element, which third element being hingedly connected with an end of the fourth U-shaped bracket 18, 37. The cabrio top further includes a third U-shaped bracket 51 that, via a mechanism of rods, is hingedly connected with the third element 19 as well as with the fourth U-shaped bracket 18, 37. US2970007A does not disclose a cabrio top with at least four elements of which the third element is not provided with a bracket.

An embodiment of the vessel according to the invention is characterized in that at a distance of the end being hingedly connected to the first element, the first U-shaped bracket is connected with a first rod being connected with the second element with an end remote from the first U-shaped bracket.

The hinged connections between the first element and the first U-shaped bracket, the first U-shaped bracket and the first rod, the first rod and the second element, the second element and the first element form a so-called four-rods mechanism, by the movement of one of "rods" of this mechanism the other rods automatically also move. The other way around also counts that if the two rods of the four-rods mechanism have a solid position in relation to each other the other rods also have that. In this manner it is possible to easily obtain a firm construction that can be folded relatively easily.

Another embodiment of the vessel according to the invention is characterized in that at a distance of the end being hingedly connected to the second element, the second U-shaped bracket is connected with a second rod being connected with the third element with an end remote from the second U-shaped bracket.

The hinged connections between the second element and the second U-shaped bracket, the second U-shaped bracket and the second rod, the second rod and the third element, the third element and the second element form a so-called four-rods mechanism, by the movement of one of "rods" of this mechanism the other rods automatically also move. The other way around also counts that if two rods of the four-rods mechanism have a solid position in relation to each other the other rods also have that. In this manner it is possible to easily obtain a firm construction that can be folded relatively easily.

Another embodiment of the vessel according to the invention is characterized in that the fourth element is hingedly connected to an end of a fourth U-shaped bracket, at a distance of the end hingedly connected to the fourth element, the third U-shaped bracket is connected with a third rod being connected with the fourth element with an end remote from the fourth U-shaped bracket.

The hinged connections between the fourth element and the third U-shaped bracket, the third U-shaped bracket and the third rod, the third rod and the fourth element, the fourth U-shaped bracket and the fourth element form a so-called four-rods mechanism, by the movement of one of "rods" of this mechanism the other rods automatically also move. The other way around also counts that if two rods of the four-rods mechanism have a solid position in relation to each other the other rods also have that. In this manner it is possible to easily obtain a firm construction that can be folded relatively easily.

Another embodiment of the vessel according to the invention is characterized in that each folding mechanism is provided with a first auxiliary rod being hingedly connected with a first end with the frame and is hingedly connected with a second end with the second element.

The hinged connections between the frame and the first auxiliary rod, the first auxiliary rod and the second element, the second element and the first element, the first element and the frame form a so-called four-rods mechanism, by the movement of one of "rods" of this mechanism the other rods automatically also move. The other way around also counts that if two rods of the four-rods mechanism have a solid position in relation to each other the other rods also have that. In this manner it is possible to easily obtain a firm construction that can be folded relatively easily.

Another embodiment of the vessel according to the invention is characterized in that each folding mechanism is provided with a second auxiliary rod being hingedly connected with a first end with the first element and hingedly connected with a second end with third and fourth auxiliary rods being hingedly connected with respectively the second and third element with ends remote from the second auxiliary rods.

The hinged connections between the first element and the second auxiliary rod, the second auxiliary rod and the third second auxiliary rod, the third auxiliary rod and the second element, the second element and the first element form a so-called four-rods mechanism.

The hinged connections between the second element and the third auxiliary rod, the third auxiliary rod and the second and fourth auxiliary rod, the fourth auxiliary rod and the third element, the third element and the second element form a so-called four-rods mechanism. By the movement of one of "rods" of this mechanism the other rods automatically also will move. The other way around also counts that if two rods of the four-rods mechanism have a solid position in relation to each other the other rods also have that.

Another embodiment of the vessel according to the invention is characterized in that each folding mechanism is provided with a fifth auxiliary rod being hingedly connected with a first end with the second element and with a second end being hingedly connected with the fourth element.

The hinged connections between the second element and the fifth auxiliary rod, the fifth auxiliary rod and the fourth element, the fourth element and the third element, the third element and the second element form a so-called four-rods mechanism, by the movement of one of "rods" of this mechanism the other rods automatically also will move. The other way around also counts that if two rods of the four-rods mechanism have a solid position in relation to each other the other rods also have that. In this manner it is possible to easily obtain a firm construction that can be folded relatively easily. If the third element is pivoted in relation to the second element, automatically the fourth element is pivoted in relation to the third element by means of the four-rods mechanism.

Another embodiment of the vessel according to the invention is characterized in that each folding mechanism is provided with a sixth auxiliary rod being hingedly connected with a first end with the third element and with a second end being hingedly connected with the seventh and eighth auxiliary rods being hingedly connected with ends remote from the sixth auxiliary rod with respectively the fourth element and the fourth U-shaped bracket.

The hinged connections between the fourth element and the seventh auxiliary rod, the seventh auxiliary rod and the sixth and eighth auxiliary rod, the eighth auxiliary rod and the fourth U-shaped bracket, the fourth U-shaped bracket and the fourth element also form a so-called four-rods mechanism. By the movement of one of "rods" of the four-rods mechanism the other rods automatically also will move. The other way around also counts that if two rods of the four-rods mechanism have a solid position in relation to each other the other rods also have that.

Another embodiment of the vessel according to the invention is characterized in that each folding mechanism is provided with a piston-cylinder combination with a piston being slidable from a cylinder, the first end of the piston-cylinder combination being hingedly connected with the frame and a second end of the piston-cylinder combination being hingedly connected with the first element.

With the use of the piston-cylinder combination the first element can be easily pivoted in relation to the frame. By the folding mechanism subsequently all the elements, U-shaped brackets and rods connected therewith are folded or unfolded.

### Short description of the drawings

The vessel according to the invention will be explained further based on the drawings, in which,
figure 1 is a perspective rear view of a part of a vessel according to the invention with a folded top,
figure 2 is a perspective rear view of a part of a vessel according to the invention with a partly unfolded top,
figures 3A-3F show side views of a part of the vessel according to the invention, the top being presented in different phases between an unfolded and folded position.

In the drawings identical reference numbers refer to identical elements.

### Description of preferred embodiments

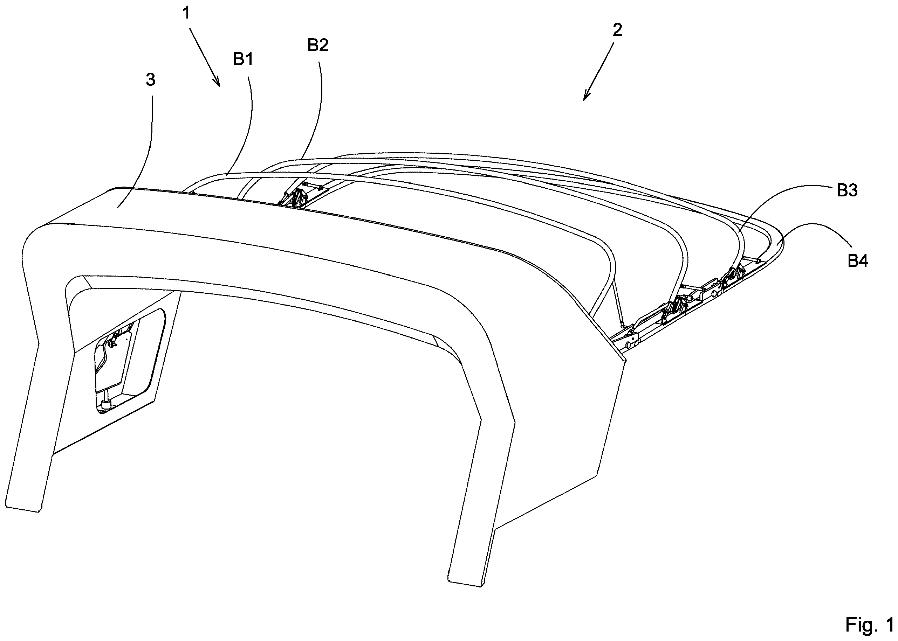

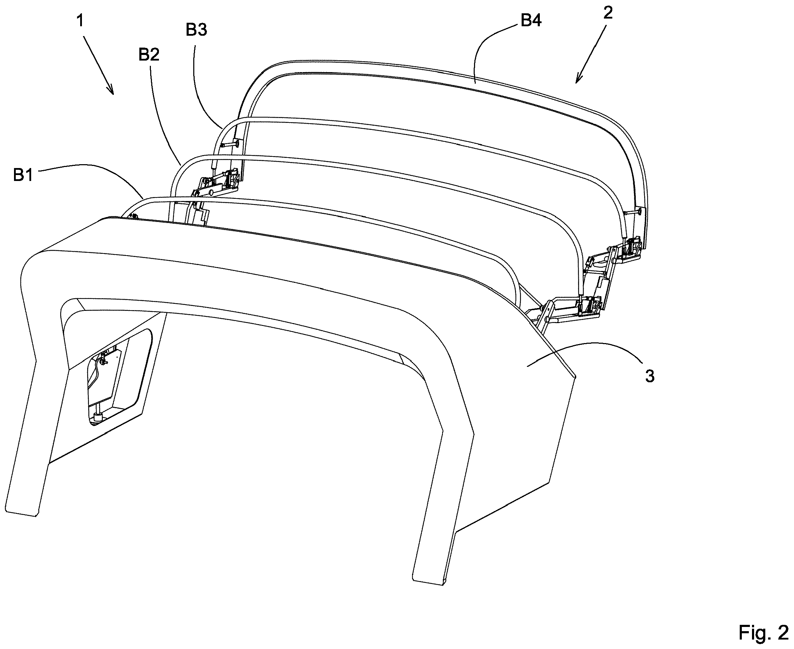

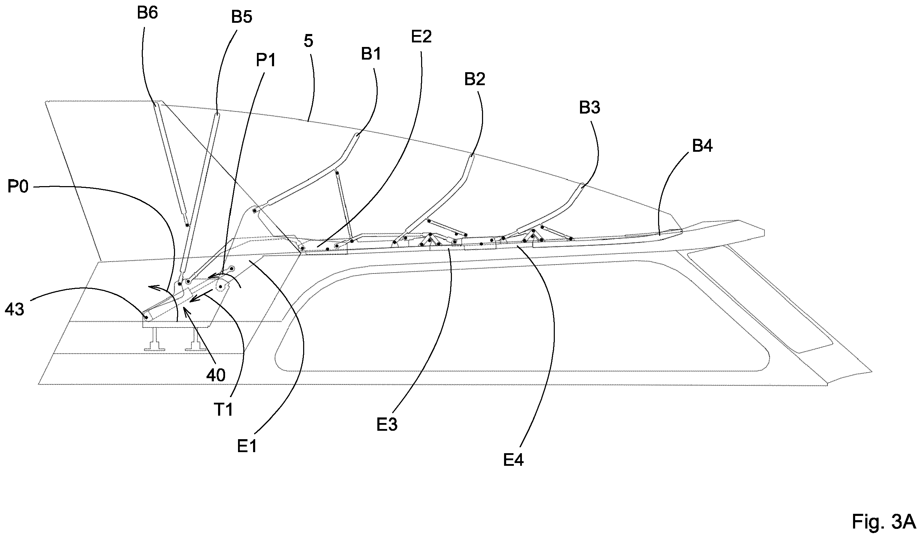

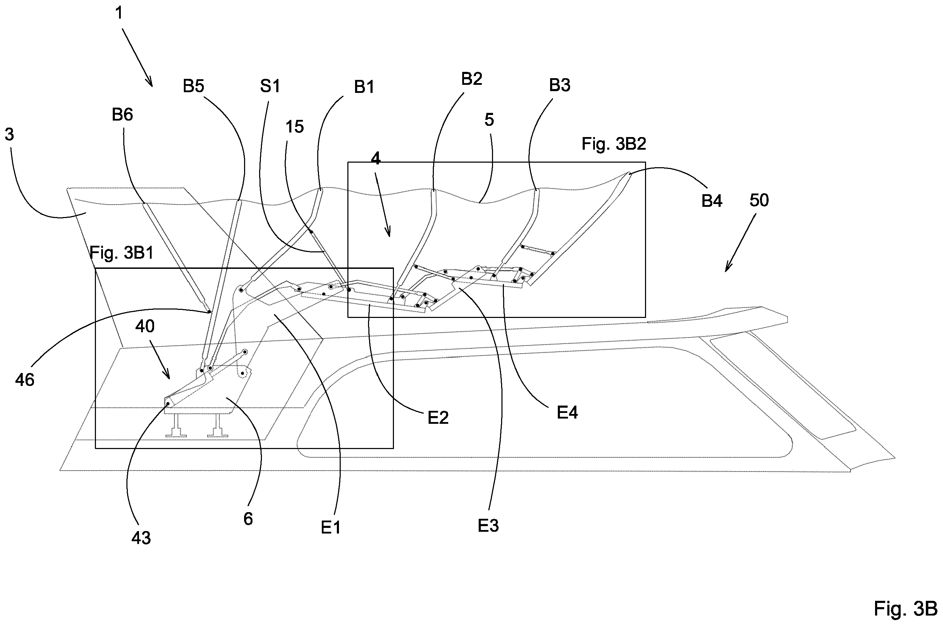

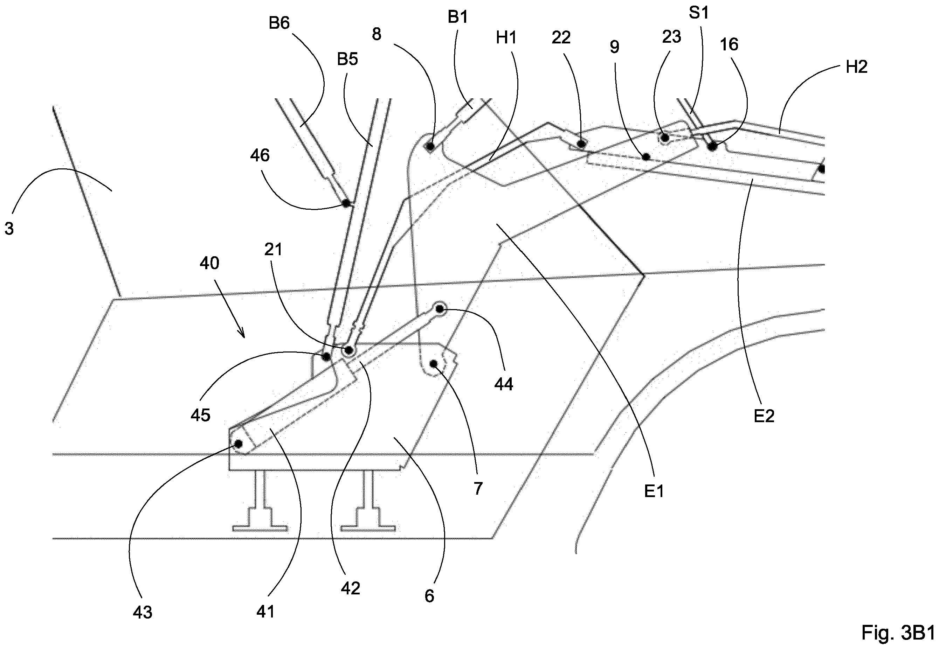

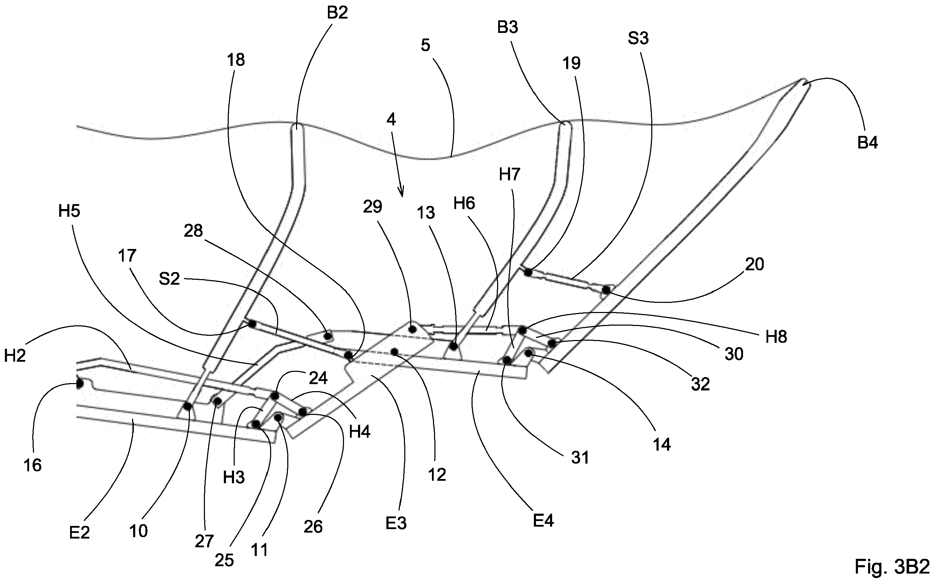

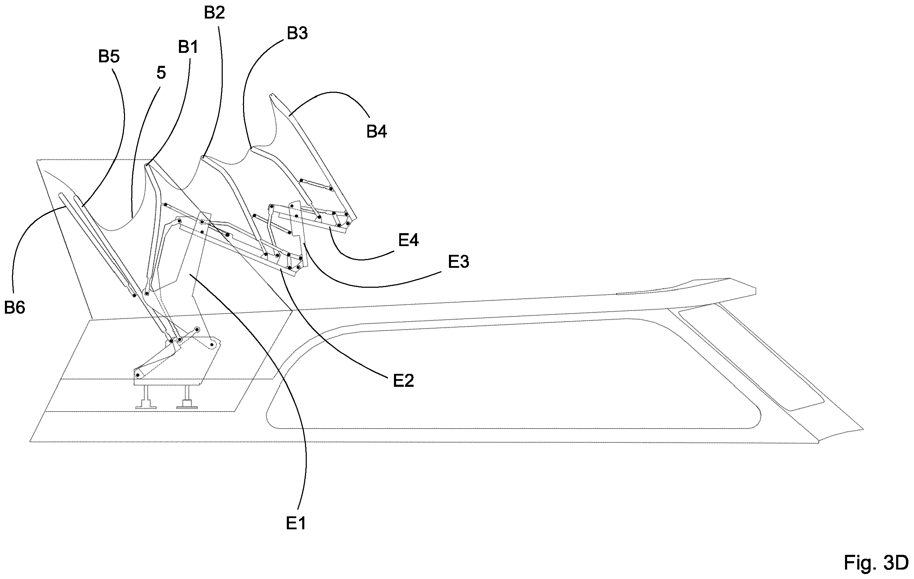

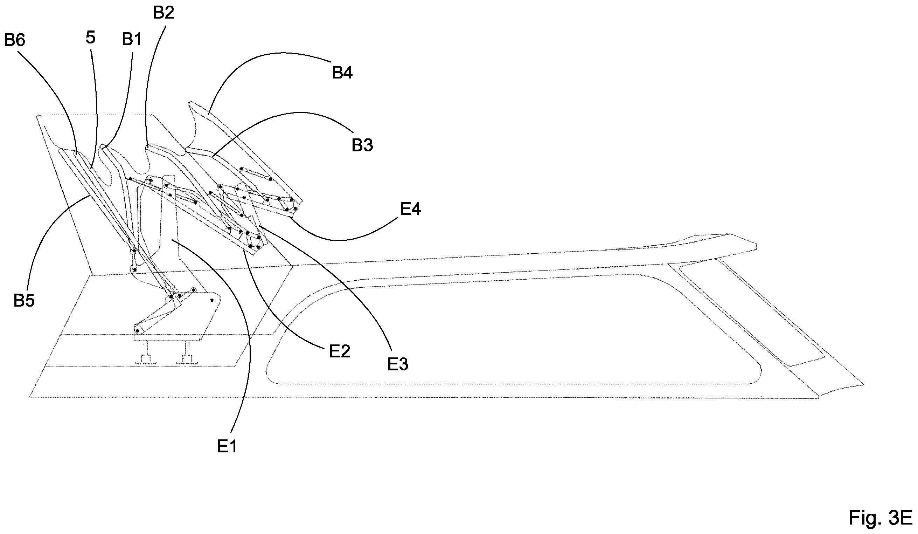

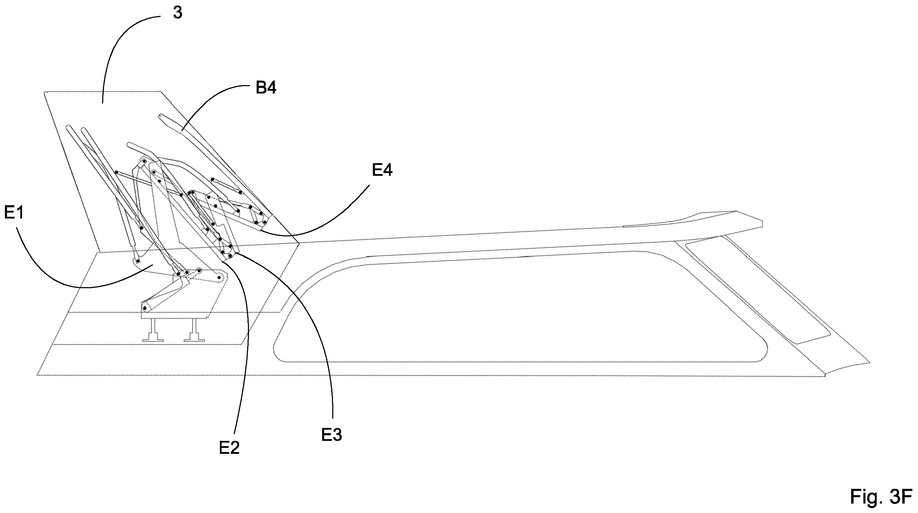

Figure 1 shows a part of a vessel 1 according to the invention. The vessel 1 includes at least one hull (not shown), a cabin situated on the hull (not shown) and a top 2 that covers a space in the vessel. The top is foldable from a fully unfolded position as shown in figures 1 and 3A via several intermediate positions as shown in the figures 3B-3E to a folded position as shown in figures 2 and 3F. In the folded position the folded top 2 is positioned in the U-shaped housing 3 connected to the cabin. On both sides of the vessel the top 2 is provided with folding mechanisms 4 being interconnected by U-shaped brackets B1, B2, B3, B4 that support a flexible cloth 5. The cloth 5 is connected to the U-shaped brackets. This can be done by Velcro, loops in the cloth through which the brackets extend etc. As also can be seen in figure 3B each folding mechanism 4 is provided with
- a frame 6,
- a first element E1 pivotably connected about a pivot axis 7 with the frame 6, which first element E1 is hingedly connected about a pivot axis 8 with an end of the first U-shaped bracket B1,
- a second element E2 pivotably connected about a pivot axis 9 with the first element E1, which second element E2 is hingedly connected a pivot axis 10 with an end of the second U-shaped bracket B2,
- a third element E3 pivotably connected about a pivot axis 11 with the second element E2 and
- a fourth element E4 pivotably connected about a pivot axis 12 with the third element E3, which fourth element E4 is hingedly connected about a pivot axis 13 with an end of the third U-shaped bracket B3 and is hingedly connected about a pivot axis 14 with an end of the fourth U-shaped bracket B4.

In operation the first and third element E1, E3 pivot in opposite direction as the second and fourth element E2, E4.

The first U-shaped bracket B1 is on a distance from the pivot axis 8 hingedly connected about a pivot axis 16 with a first rod S1 being hingedly connected about a pivot axis 17 with an end remote from the first U-shaped bracket B1 with the second element E2.

The second U-shaped bracket B2 is on a distance from the pivot axis 10 hingedly connected about a pivot axis 17 with a second rod S2 being hingedly connected about a pivot axis 18 with an end remote from the second U-shaped bracket B2 with the third element E3.

The third U-shaped bracket B3 is on a distance from the pivot axis 13 hingedly connected about a pivot axis 19 with a third rod S3 being hingedly connected about a pivot axis 20 with an end remote from the third U-shaped bracket B3 with the fourth U-shaped bracket B4.

Each folding mechanism 4 further is provided with a first auxiliary rod H1 being hingedly connected with a first end about a pivot axis 21 with the frame 6 and with a second end hingedly about a pivot axis 22 connected with the second element E2.

Each folding mechanism 4 further is provided with a second auxiliary rod being hingedly connected with a first end about a pivot axis 23 with the first element E2 and with a second end hingedly about a pivot axis 24 connected with third and fourth auxiliary rods H3, H4 being hingedly connected about pivot axis 26, 26 with ends remote from the second auxiliary rod H2 with respectively the second and third element E2, E3.

Each folding mechanism 4 further is provided with a fifth auxiliary rod H5 being hingedly connected with a first end about a pivot axis 27 with the second element E2 and with a second end hingedly connected about a pivot axis 28 with the fourth element E4.

Each folding mechanism 4 further is provided with a sixth auxiliary rod H6 being hingedly connected with a first end about a pivot axis 29 with the third element E3 and with a second end hingedly connected about a pivot axis 30 with seventh and eighth auxiliary rods H7, H8 being hingedly connected about pivot axis 31, 32 with ends remote from the sixth auxiliary rod H6 with respectively the fourth element and the fourth U-shaped bracket.

Each folding mechanism further is provided with a piston-cylinder 40 combination with a piston 42 that is slidable from a cylinder 41, a first end of the piston-cylinder combination 40 is hingedly connected about a pivot axis 42 with the frame 6 and a second end of the piston-cylinder combination 40 is hingedly connected about a pivot axis 44 with the first element E1.

The vessel 1 further comprises two extra U-shaped brackets B5, B6. The fifth U-shaped bracket B5 is hingedly connected about a pivot axis 45 with the frame 6. The sixth U-shaped bracket B6 is hingedly connected about a pivot axis 46 with the fifth U-shaped bracket B5.

In the figures 3A-3F underneath the housing 3 a part of the cabin is visible.

The mode of operation of the foldable top is as follows.

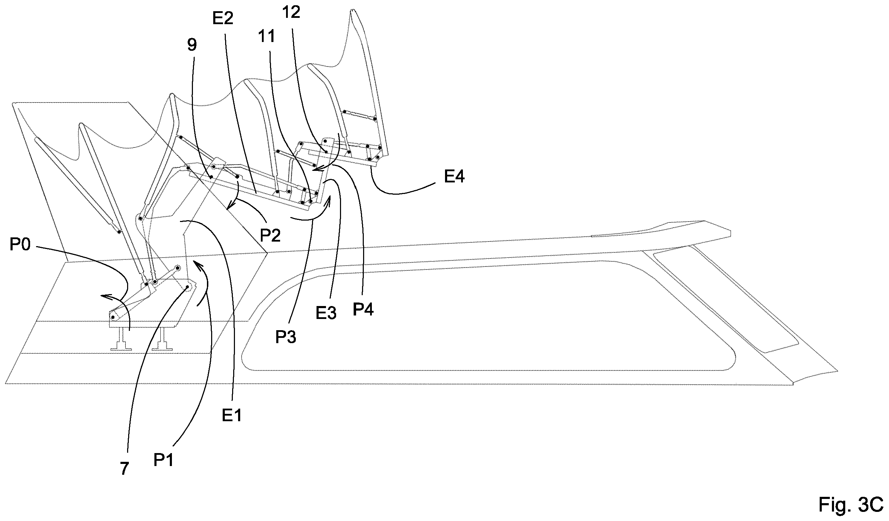

If the top 2 is in the unfolded, in figure 3A shown position, the piston-cylinder combination 40 is activated moving the piston 42 towards the cylinder 41 in the direction indicated by the arrow T1. Thereby the first element E is pivoted in the direction indicated by arrow P1 and the piston-cylinder combination 40 pivots about pivot axis 43 in the direction indicated by arrow P0. By pivoting the first element E1 also the pivot axis 8, 9, 23 are being moved and thus also the connected first U-shaped bracket B1, the second element E2 and the first auxiliary rod H1. As a result of the above described four-rods mechanism all elements, U-shaped brackets, rods and auxiliary rods will move folding the U-shaped brackets B1-B4 and the cloth that is connected. Hereby the first and the third element E1, E3 pivot in the direction indicated by arrows P1, P3, that is counterclockwise as can be seen in figure 3C, while the second and the fourth element E2, E4 pivot in the direction indicated by arrows P2, P4, that is clockwise as can be seen in figure 3C. The first and second elements E2, E3 are being moved with the lower sides towards each other. The second and third elements E2, E3 are being moved with the upper sides towards each other. The third and fourth elements E3, E4 are being moved with the lower sides towards each other. This keeps the U-shaped brackets B1-B4 reasonably parallel to each other during folding.

As a result of the weight of the U-shaped brackets B1-B4 and the cloth 5 connected thereto while further folding the top 2, the fifth and sixth U-shaped brackets B5, B6 are being moved automatically in the direction of the housing 3. These U-shaped brackets B5, B6 are connected with the cloth 5 but not directly connected with the folding mechanism 4.

From the completely folded position as shown in figure 3F the top 2 can be unfolded by activating the piston-cylinder combination 40 moving the piston 42 away from the cylinder 41 in a direction opposite to the one indicated by arrow T1. Subsequently the elements E1, E2, E3, E4 will be pivoted in a direction opposite to the arrows P1, P2, P3, P4.

Of course, it is also possible to pivot the first element in relation to the frame in another way like with a motor, a screw spindle or by hand. It is also possible to move two other elements of the folding mechanism with a piston-cylinder combination or other driving manner in relation to each other folding or unfolding all elements, U-shaped brackets and rods that are connected.

### List of reference numbers

- 1: vessel
- 2: top
- 3: U-shaped housing
- 4: folding mechanism
- 5: cloth
- 6: frame
- 7-32: pivot axis
- 40: piston-cylinder combination
- 41: cylinder
- 42: slidable piston
- 43-46: pivot axis
- 50: cabin
- B1: first U-shaped bracket
- B2: second U-shaped bracket
- B3: third U-shaped bracket
- B4: fourth U-shaped bracket
- B5: fifth U-shaped bracket
- B6: sixth U-shaped bracket
- E1: first element
- E2: second element
- E3: third element
- E4: fourth element
- H1: first auxiliary rod
- H2: second auxiliary rod
- H3: third auxiliary rod
- H4: fourth auxiliary rod
- H5: fifth auxiliary rod
- H6: sixth auxiliary rod
- H7: seventh auxiliary rod
- H8: eighth auxiliary rod
- T1: arrow
- P1: arrow
- P2: arrow
- P3: arrow
- P4: arrow
- S2: second rod
- S3: third rod

## Claims

1. Vessel (1) provided with a roof comprising a foldable top (2), which top (2) is movable from a folded position to an unfolded position and vice versa, the top (2) being provided with folding mechanisms (4) laying on both sides of the vessel, which folding mechanisms being connected to each other by U-shaped brackets (B1, B2, B3, B4, B5, B6) supporting a flexible cloth (5), each folding mechanism (4) being provided with a first element (E1) being pivotably with respect to a frame and being pivotably connected to an end of a first U-shaped bracket (B1) and a second element (E2) being pivotably connected to the first element (E1) and pivotably connected to an end of the second U-shaped bracket (B2), **characterized in that** each folding mechanism (4) comprises a third element (E3) being pivotably connected with the second element (E2) and a fourth element (E4) being pivotably connected with the third element (E3), the first and third element (E1, E3) pivoting in the opposite direction of the second and fourth element (E2, E4), the fourth element (E4) being hingedly connected with an end of the at least third U-shaped bracket (B3), whilst the third element (E3) is not provided with a U-shaped bracket.

2. Vessel (1) according to claim 1, **characterized in that** at a distance of the end being hingedly connected to the first element (E1), the first U-shaped bracket (B1) is connected with a first rod (H1) being connected with the second element (E2) with an end remote of the first U-shaped bracket (B1).

3. Vessel (1) according to claim 1, **characterized in that** at a distance of the end being hingedly connected to the second element (E2), the second U-shaped bracket (B2) is connected with a second rod (H2) being connected with the third element (E3) with an end remote of the second U-shaped bracket (B2).

4. Vessel (1) according to one of the preceding claims, **characterized in that** the fourth element (E4) is hingedly connected to an end of a fourth U-shaped bracket (B4), at a distance of the end hingedly connected to the fourth element (E4), the third U-shaped bracket (B3) is connected with a third rod (H3) being connected with the fourth element (E4) with an end remote of the fourth U-shaped bracket (B4).

5. Vessel (1) according to one of the preceding claims, **characterized in that** each folding mechanism (4) is provided with a first auxiliary rod (H1) being hingedly connected with a first end with the frame (6) and is hingedly connected with a second end with the second element (E2).

6. Vessel (1) according to one of the preceding claims, **characterized in that** each folding mechanism (4) is provided with a first auxiliary rod (H2) being hingedly connected with a first end with the first element (E1) and being hingedly connected with a second end with the third and fourth auxiliary rods (H3, H4) being hingedly connected with respectively the second and third element (E2, E3) with ends remote of the second auxiliary rods (H2).

7. Vessel (1) according to claim 6, **characterized in that** each folding mechanism (4) is provided with a fifth auxiliary rod (H5) being hingedly connected with a first end with the second element (E2) and with a second end being hingedly connected with the fourth element (E4).

8. Vessel (1) according to one of the preceding claims, **characterized in that** each folding mechanism (4) is provided with a sixth auxiliary rod (H6) being hingedly connected with a first end with the third element (E3) and being hingedly connected with a second end with the seventh and eighth auxiliary rods (H7, H8) being hingedly connected with ends remote of the sixth auxiliary rod (H6) with respectively the fourth element (E4) and the fourth U-shaped bracket (B4).

9. Vessel (1) according to one of the preceding claims, **characterized in that** each folding mechanism (4) is provided with a piston-cylinder combination (40) with a piston (42) being slidable from a cylinder (41), a first end of the piston-cylinder combination (40) being hingedly connected with the frame (6) and a second end of the piston-cylinder combination (40) being hingedly connected with the first element (E1).
